Europäisches Patentamt

(19) European Patent Office    (11) Publication number: **0 003 902**

Office européen des brevets                           **B1**

(12)    **EUROPEAN PATENT SPECIFICATION**

(45) Date of publication of patent specification: **10.02.82**    (51) Int. Cl.³: **B 23 B 3/32**

(21) Application number: **79300257.7**

(22) Date of filing: **20.02.79**

(54) **A biaxial, double-spindle turning machine.**

(30) Priority: **21.02.78 US 879527**

(43) Date of publication of application:
**05.09.79 Bulletin 79/18**

(45) Publication of the grant of the European patent:
**10.02.82 Bulletin 82/6**

(84) Designated Contracting States:
**DE FR GB IT**

(56) References cited:
**DE - A - 1 602 728**
**US - A - 3 340 447**
**US - A - 3 605 531**
**US - A - 3 754 178**

**WERKSTATT UND BETRIEB, Vol. 107, August 1974, München,**
**C. PIEPKE "Doppelspindliger NC-Drehautomat mit Zweiachsen-Bahnsteuerung"**
**pages 479 to 483**

(73) Proprietor: **EX-CELL-O CORPORATION**
**2855 Coolidge Highway**
**Troy Michigan 48084 (US)**

(72) Inventor: **Buckley, James Edward**
**13425 Denver Circle**
**Sterling Heights Michigan 48087 (US)**
Inventor: **McKendrick, Thomas Edward**
**7693 August Street**
**Westland Michigan 48185 (US)**
Inventor: **North, Lee Emerson**
**35425 Heritage Court**
**Farmington Michigan 48024 (US)**

(74) Representative: **Blatchford, William Charles et al,**
**WITHERS & ROGERS 4 Dyers Buildings Holborn**
**London, EC1N 2JT (GB)**

## A biaxial, double-spindle turning machine

This invention relates to a turning machine, and particularly to a biaxial, double-spindle turning machine having means for independent, bidirectional tool offset or compensation in each axial dimension.

In a turning machine, a workpiece is turned by a spindle having an axis or rotation. A machining tool, for example a cutting tool, is mounted in a tool holder which is movable through a range of positions adjacent the axis of rotation. The workpiece can be shaped into the required form by selectively moving the tool holder with respect to the axis of rotation, so as to change or alter the point of engagement of the tool with the workpiece. In a modern turning machine the motion of the tool holder is controlled by a numerical control unit that contains a stored programme with instructions for movement of the tool holder.

Productivity can be increased by equipping the turning machine with more than one spindle to perform more than one simultaneous turning operation. In this form of turning machine, a plurality of tool holders, equal in number or sets to the number of spindles, is mounted on a common slide that moves each tool holder through a range of positions with respect to the axis of rotation of its respective spindle. The machining operation may then be accomplished by moving the entire slide through a sequence of operations under the control of a stored programme.

A problem associated with automatically controlled turning machines is the need for tool offset or compensation. This problem arises because the position of a tool will frequently need to be recalibrated or offset to accommodate operating parameters which affect the proper position of the tool. Some of these operating parameters are for example:— tool wear; tool displacement due to thermal and structural deflections of the turning machine support structure; tool presetting errors; tool insert size errors; and programming and/or processing errors in the control unit. When the influence of one or more of these parameters causes the tool position to be outside the tolerance limits, then tool offset must be made to bring the tool back into proper positional relationship with respect to its spindle.

The problem of tool offset or recalibration becomes even greater in a multi-spindle turning machine. Thus each of the plurality of tools on the multi-spindle turning machine may require independent offset or recalibration due to such factors as uneven tool wear, or errors in tool size or presetting. In this instance, each tool holder mounted on the common slide must be movable with respect to every other tool holder on the slide. In the specific example of a turning machine having first and second spindles, a first tool holder is fixed on the slide, and a second tool holder is movably mounted on the slide with respect to the fixed position of the first toolholder.

The problem becomes increasingly complex where machining operations take place in two dimensions with respect to the axis of rotation of the spindle. The two-dimensional or biaxial turning machine requires a first, compound slide to move in a first direction with respect to the spindle axes or rotation, and a second, cross slide, mounted in sliding relation to the compound slide, to move in a second direction transverse to the direction of motion of the compound slide. First and second auxiliary slides are mounted in sliding relation on the cross slide and are movable parallel to the compound slide and cross slide respectively. Each of the auxiliary slides carries a tool holder or turret with a plurality of tool holders.

U.S. Patent No. 3,754,178 proposes a control system for tool offset in a multi-spindle, single axis turning machine. However, its disclosure is concerned only with a single axis of a turning machine, and does not address the further problems which may require bidirectional, independent tool offset in a biaxial turning machine. Moreover, the control system of U.S. Patent No. 3,754,178 requires rather elaborate signal processing circuitry to provide for independent tool offset, and in particular, it requires two signal comparisons, a signal summing and a signal inversion, to effect an independent offset of one tool holder with respect to the other.

It is an object of the present invention to provide a double-spindle, biaxial turning machine which includes a control system for providing independent tool offset in either of two dimensions. It is another object of the invention to provide a relatively simple machine and control system which does not require elaborate signal processing circuitry.

The invention as claimed is intended to solve the above-discussed problems and to achieve the above-stated objects.

The preferred embodiment of the invention contemplates a turning machine having first and second spindles with parallel axes of rotation. A compound slide is movable with respect to a support structure in a first direction with respect to the axes of rotation. A cross slide is mounted on the compound slide and is movable in a second direction transverse to the first direction. First and second auxiliary slides are mounted on the cross slide for movement in the first and second directions, respectively. Each auxiliary slide carries a tool holder. The tool holders are each in the form of a turret which includes a plurality of several different tools, each of which may be selected by an operator for a particular machining operation. Each machine slide, namely the compound slide, cross slide, and first and second auxiliary slides, has associated with it a motor or similar type of axis drive means. Each motor or axis drive means has associated with it a sensor responsive to a change in slide position.

When it is determined that an offset or compensation is required, the operator enters into a control unit associated with the turning apparatus information as to the particular tool requiring offset and the dimension in which it is to be offset. In addition, if the offset requires motion of either the compound slide or the cross slide, the operator enters a counter-offset command that counteradjusts the tool on the cross slide that does not require an offset or the same amount of offset. Each command is then processed by a control circuit that includes an independent servo-feedback loop for each drive means. In the preferred embodiment the control of each drive means requires only a single comparison of the command with the sensor signal associated with that drive means.

The invention will now be described by way of example, with reference to the accompanying drawings, in which:—

Figure 1 is a schematic elevation of an embodiment of a double-spindle, biaxial turning machine

Figure 2 is an enlarged representation of part of Figure 1, showing in more detail the biaxial slide assembly; and

Figure 3 shows a control circuit used to control the position of each movable slide.

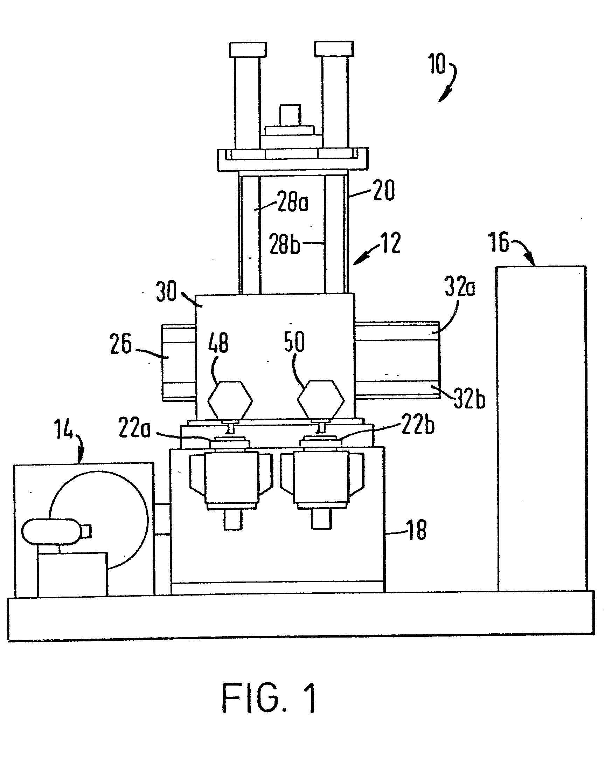

A turning machine 10 in accordance with the invention is shown generally in Figure 1, and this is one possible embodiment of the invention. The invention can also be used in any configuration of multi-spindle machine in which individual tool compensation may be required. The machine 10 has three main parts, i.e. a multi-spindle turning machine 12, a motor drive system 14 for the machine, and a numerical control unit 16 which contains a stored programme and circuitry that controls operation of the machine 12.

The machine 12 includes a support structure comprising a base 18 and a vertical column 20. A pair of spindles 22a and b are arranged to hold and rotate a pair of workpieces in a machining operation. The spindles have parallel axes of rotation, which in this embodiment are parallel to the longitudinal axis of the vertical column 20, and are therefore vertical. The motor drive system 14 provides power to rotate the spindles 22a and 22b.

A compound slide 26 is mounted on the vertical column 20. The compound slide 26 is slidable in a vertical direction, and thus parallel to the axes of rotation of the spindles 22a and 22b, on a pair of guideways 28a and 28b formed on the column .

A cross slide 30 is in turn mounted on the compound slide 26, and is slidable in a direction transverse to the axes of the spindles 22a and 22b on a second pair of guideways 32a and b on the compound slide 26.

Two turrets 48 and 50 are mounted on the cross slide 30 and spaced from one another a distance equal to the spacing of the axes of the spindle 22a and 22b. Each turret 48, 50 holds a plurality of tools which may be independently selected by the operator. Each turret 48, 50 is also mounted on a respective auxiliary slide in a manner to be discussed in greater detail.

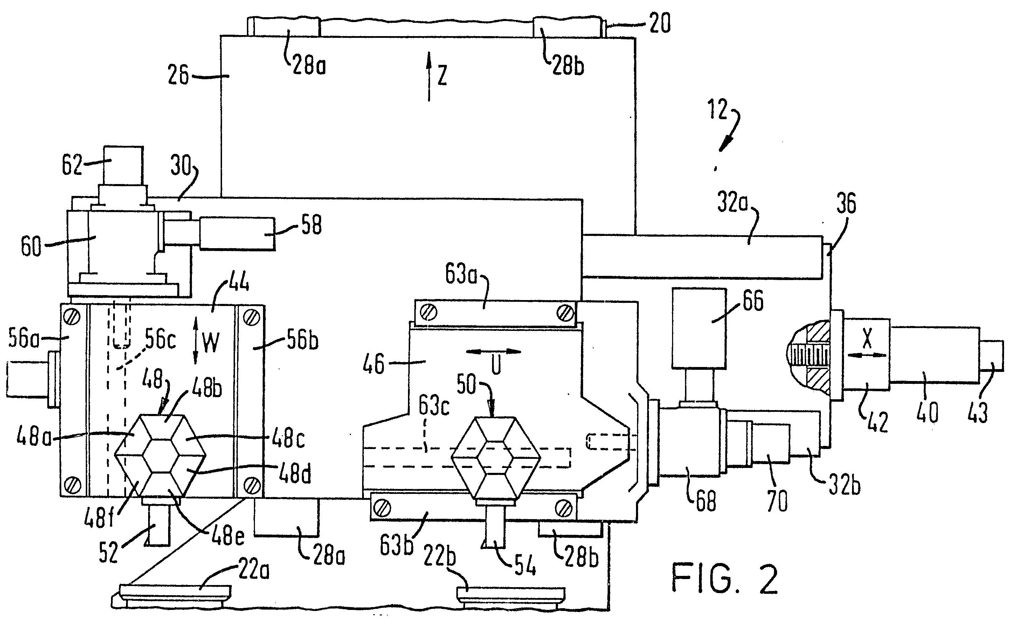

Referring now to Figure 2, the column 20 has formed on it the first pair of guideways 28a and 28b. Each guideway 28a and 28b is in parallel, spaced relation to the other, and is preferably formed of hardened, ground steel. The compound slide 26 has formed on its underside a complementary pair of channels or grooves bonded with low friction material for smooth sliding to allow the compound slide 26 to be driven up and down on the column 20, along the Z-axis, see the vertical arrow. The compound slide 26 is driven by driven mechanism (not shown in Figure 2) which preferably includes a servo-drive motor and an associated ball screw drive. A slide position transducer (not shown) is associated with the drive mechanism and produces a signal representative of the position of the compounds slide 26.

The cross slide 30 is carried on a saddle 36 formed as part of the compound slide 26. The saddle 36 includes a second pair of guideways 32a and 32b. Each guideway 32a, 32b is preferably of hardened, ground steel. The guideways 32a, 32b are in spaced, parallel relation to one another along a second direction transverse to the Z-axis. The underside of the cross slide 30 is provided with a pair of complementary, shaped channels or grooves bonded with low friction material which allows the cross slide 30 to be moved over the saddle 36 in the second direction, the X-axis which is indicated by the double-headed arrow. The cross slide 30 has drive means including a servo-drive motor 40 and an associated ball screw drive 42. A position sensor 43 is associated with the drive means and produces a signal representative of the position of the cross slide 30.

Two auxiliary slides 44, 46 are mounted on the cross slide 30 and are nominally spaced from one another a distance equal to the spacing between the axes of the spindles 22a and 22b. The auxiliary slides 44, 46 carry the turrets 48, 50, respectively. Each turret 48, 50 may be rotated by the operator through multiple index positions and each position brings into operation a different tool, for example tools 52 and 54. In the present embodiment, each turret 48, 50 has six separate positions; for example turret 48 includes positions 48a, b, c, d, e and f.

The left auxiliary slide 44 is mounted in a pair of parellel, spaced keepers 56a, 56b and is guided by a guideway 56c which allows the left auxiliary slide 44 to be moved relative to the cross slide in a direction parellel to the Z-axis. The axis of travel of the left auxiliary slide 44 will be referred to as W-axis, see the double-headed vertical arrow. The auxiliary slide 44 is driven by a servo-drive motor 58 and an associated ball screw drive 60. A resolver 62 or other type of position sensor is responsive to the position of the ball screw drive 60, to produce an output signal representative of the position of the auxilary slide 44. Each drive means associated with the compound slide 26 and the cross slide 30 may also use encoders as position sensors.

The right auxiliary slide 46 is mounted in a pair of parallel, spaced keepers 63a, 63b and is guided by a guideway 63c which allows the right auxiliary slide 46 to be moved relative to the cross slide 30 in a direction parallel to the X-axis. The direction of travel of the right auxiliary slide 46 will be referred to as the U-axis, see the double-headed horizontal arrow. The right auxiliary slide 46 is driven by a servo-drive motor 66 and an associated ball screw drive 68. A resolver 70 or other type of position sensor is responsive to the position of the ball screw-drive 68, to produce an output signal representative of the position of the auxiliary slide 46.

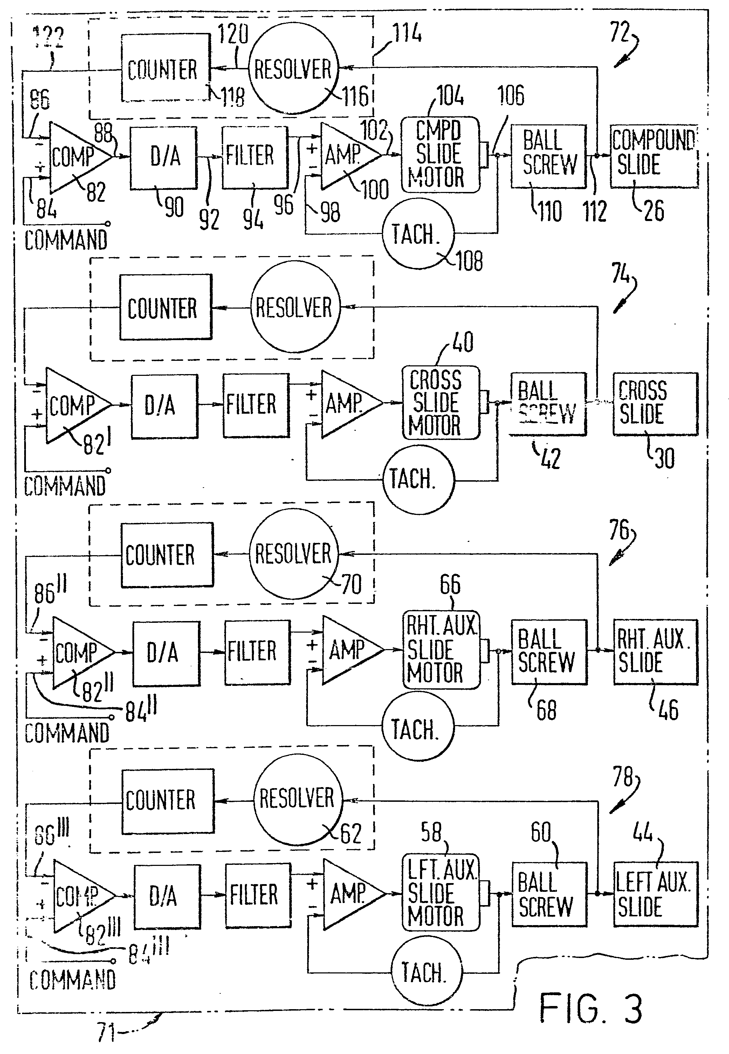

Referring now to Figure 3, a control circuit 71 has the function of controlling the offset or compensation for each slide, including compound slide 26, cross slide 30, left auxiliary slide 44, and right auxiliary slide 46. The control circuit 71 is divided into four independent control channels 72, 74, 76 and 78, each of which is associated with a respective slide. A description of the control channel 72 will be exemplary of each control channel.

The control channel 72 includes a comparator 82 having respective positive and negative inputs 84, 86. The positive input 84 receives a command indicative of the offset or compensation required for its associated slide, in this case the compound slide 26. The negative input 86 receives a feedback signal from the sensor means that is responsive to the position of the slide 26. This feedback signal will be more fully explained below. The comparator 82 gives as an output on a line 88 a difference or error signal which is proportionate to the difference between the signals on the inputs 84, 86.

It is preferred that both signals 84, 86 be digital in format, and likewise the output signal appearing on line 88 is a digital. The digital signal on line 88 is applied as an input directly to a digital-to-analog converter 90 for conversion to an equivalent analog signal.

The analog signal appears on a line 92 and is applied as an input directly to a filter 94 to filter out any artifacts or transient signals appearing in the analog output of the converter 90. The filtered analog output signal is directly received by the positive input 96 of a drive amplifier 100, which also has a negative input 98 to receive a motor feedback signal that will be discussed in greater detail below. The drive amplifier 100 output is applied to an amplified motor drive signal on a line 102 to a servo-drive motor 104 that drives the compound slide 26.

A tachometer 108 or other speed sensing device is coupled to the output shaft of the motor 104 to sense the angular velocity 106 of the motor shaft. The output signal of the tachometer 108 is directly applied to the negative input 98 of the drive amplifier 100 to provide negative feedback to stabilise the motor 104.

The shaft of the motor 104 is coupled to a ball screw drive 110 which transmits the output of the motor to the compound slide 26. A resolver 116 is coupled to the ball screw drive 110 and senses the amount of motion as represented by signal 112, which is applied to the compound slide 26. The resolver 116 applies an output analog signal 120 representative of the angular displacement 112 of the ball screw 110. The analog signal 120 is received by a counter 118 which converts it to an equivalent digital output signal 122. The signal 122 is applied to the negative input 86 of the comparator 82, and defines the feedback signal which has been previously referred to. The resolver 116 and counter 118 together form a position transducer 114 for the slide 26.

The operation of the machine will now be described by way of example in two situations, as follows:

First, the situation in which the machine operator decides that the tool 54 on the turret 50 of the right auxiliary slide 46 requires an offset in the +Z direction, and the tool 52 on the turret 48 on the left auxiliary slide 44 is properly positioned and needs no offset or compensation. The offset of tool 54 will require displacement of the compound slide 26 in the +Z direction an amount equal to the offset required for tool 54. Similarly, a counter-offset will be required for tool 52 to compensate for the offset of tool 54.

Accordingly, the operator will enter offset and counter-offset commands into the control unit 16, Figure 1. These commands correspond to the digital command signal appearing at input 84 of comparator 82 in control channel 72, and input 84''' of comparator 82''' in control channel 78.

With reference to control channel 72, the digital command appearing at input 84 will be compared against the digital signal on line 86 representing the present position of the compound slide 26. A difference signal appearing on line 88 is proportionate to the difference between the command and feedback signals 84, 86 respectively. The difference signal 88 is converted to analog form by converter 90. The analog output appearing on line 92 is received by the filter 94. The filtered analog signal is applied to the positive input 96 of the drive amplifier 100. The output of the drive amplifier 100 appearing on line 102 energises the servo-drive motor 104 and causes a change in position of its output shaft. The shaft output 106 is applied to the ball screw drive 110 which transmits motion 112 to the compound slide 26.

The motion 112 is sensed by the resolver 116 which then provides as an output an analog signal 120 representative of the motion 112 to the counter 118. The counter 118 provides as an output an equivalent digital representation of the signal 120 in the form of the feedback signal 122. The latter is applied to the negative input 86 of the comparator 82. This process is repeated until the comparator output signal, i.e. the difference signal 88, becomes zero, indicating that the compound slide 26 has been moved to the commanded position. The counter-offset of the left auxiliary slide 44 is accomplished through the same signal processing procedure in the control channel 78, and need not be repeated.

In the second exemplary situation, the operator decides that an offset is required for tool 54 in the +X direction. In this case, the right auxiliary slide 46 can be independently moved along the U-axis for the required offset; there is no required counter-offset of the auxiliary slide 44. Accordingly a command is entered by the operator in the control unit 16 (Figure 1) indicating the need for the specified offset or compensation of the tool 54. A corresponding digital command signal then appears at the input 84" of comparator 82" of the control channel 76. The processing of this command through the control channel 76 is the same as the processing of a command to control channel 72, and the detailed description need not be repeated.

## Claims

1. A turning machine (10) comprising:—
a support structure (18, 20);
first and second spindles (22a, 6) mounted on the support structure and having parallel axes of rotation, each spindle being arranged to rotate a respective workpiece as it is subjected to a machining operation by a tool (52, 54) movable with respect to the axes of rotation;
a compound slide (26) slidably mounted on the support structure for motion in a first direction with respect to the axes of rotation;
a cross slide (30) slidably mounted on the compound slide (26) for motion in a second direction transverse to the first direction;
a first tool holder (48) mounted on the cross slide (30);
an auxiliary slide (46), with a second tool holder (50), slidably mounted on the cross slide (30) for motion in the second direction;
a plurality of axis drive means (104, 40, 66, 58), each associated with a respective slide or tool holder, for moving that slide or tool holder;
a plurality of sensors (43, 70) each associated with the cross slide (30) and the second tool holder (50) respectively, for sensing motion of that slide and tool holder respectively and providing an output signal representative thereof; and
control means (72, 74, 76, 78) responsive to a position command signal for the cross slide (30) and the second tool holder (50) respectively and to the output signal of the sensor (43, 70) associated with the cross slide (30), for controlling the respective axis drive means to position the cross slide (30) and the second tool holder (50) respectively in accordance with the command signal,
characterised by a second auxiliary slide (44) which carries the first tool holder (48), the second auxiliary slide being slidably mounted on the cross slide (30) for motion in the first direction.

2. A machine according to claim 1 wherein the control means comprises a plurality of independent control channels (72, 74, 76, 78), in like number to the plurality of axis drive means, each control channel being associated with a respective axis drive means (104, 40, 66, 58).

3. A machine according to claim 2 wherein each control channel comprises:—
comparator means (82) for comparing a command signal (122) and sensor output signal (86) associated with the respective axis drive means (104) and producing a difference signal (88) in accordance with the difference therebetween; and
driver means (100) intercoupled between the comparator means (82) and associated axis drive means (104), and responsive to the difference signal (88) for energising the respective axis drive means (104) in accordance with the difference signal (88).

4. A machine according to claim 3 wherein the axis drive means includes a motor (104), and the drive means (100) includes a drive amplifier (100) having positive and negative inputs (96, 98), and a tachometer (108) associated with the motor output (106), the drive amplifier (100) receiving the difference signal (88) at its positive input and the tachometer output at its negative input, so as to stabilise driving of the motor.

5. A machine according to claim 3 wherein the command signal (122) is digital, and the sensor means includes a device (118) for converting the sensor signal (120) from analog to digital format.

6. A machine according to claim 1 wherein each axis drive means comprises a drive motor (40, 58, 66) and a ball screw drive (42, 60, 68) coupled between the drive motor and the respective slide.

7. A machine according to claim 1 wherein each tool holder comprises a turret (48, 50) for selectively positioning one of a plurality of tools for a machining operation.

## Revendications

1. Tour comprenant:
une structure porteuse (18, 20);
une première broche et une seconde (22a, 22b) montées sur la structure porteuse et ayant des axes de rotation parallèles, chaque broche étant disposée pour faire tourner une pièce à traiter correspondante quand elle est soumise à une opération d'usinage par un outil (52, 54) mobile par rapport aux axes de rotation;
un chariot composite (26) monté pour coulisser sur la structure porteuse en se déplaçant dans une première direction par rapport aux axes de rotation;
un chariot transversal (30) monté pour coulisser sur le chariot composite (26) en se déplaçant dans une seconde direction transversale à la première direction;
un premier porte-outil (48) monté sur le chariot transversal (30);
un chariot auxiliaire (46) avec un second porte-outil (50) monté pour coulisser sur le chariot transversal (30) en se déplaçant dans la seconde direction;
une pluralité de moyens d'entraînement axial (104, 40, 66, 58) associés respectivement à un chariot ou porte-outil pour déplacer ce chariot ou porte-outil;
une pluralité de capteurs (43, 70), associés respectivement au chariot transversal (30) et au second porte-outil (50) pour capter le mouvement de ce chariot et du porte-outil respectivement et fournir un signal représentatif de ce mouvement; et
un moyen de commande (72, 74, 76, 78) répondant à un signal de commande de position pour le chariot transversal (30) et le second porte-outil (50) respectivement et au signal de sortie du capteur (43, 70) associé au chariot transversal (30) pour commander le moyen d'entraînement axial correspondant qui met en position le chariot transversal (30) et le second porte-outil (50) respectivement en concordance avec le signal de commande,
caractérisé par un second chariot auxiliaire (44) qui porte le premier porte-outil (48), ce second chariot auxiliaire étant monté pour coulisser sur le chariot transversal (30) en se déplaçant dans la première direction.

2. Tour selon la revendication 1, dans lequel le moyen de commande comprend une pluralité de canaux de commande indépendante (72, 74, 76, 78) en même nombre que les moyens d'entraînement axial, chaque canal de commande étant associé respectivement avec un moyen d'entraînement axial correspondant (104, 40, 66, 58).

3. Tour selon la revendication 2, dans lequel chaque canal de commande comprend:
un moyen comparateur (82) pour comparer un signal de commande (122) et un signal de sortie de capteur (86) associé à un moyen d'entraînement axial correspondant (104) en produisant un signal de différence (88) selon la différence entre les signaux ci-dessus; et

un moyen d'entraînement (100) en liaison entre le moyen comparateur (82) et le moyen d'entraînement axial associé (104) et répondant au signal de différence (88) pour mettre en action le moyen d'entraînement axial respectif (104) selon le signal de différence (88).

4. Tour selon la revendication 3, dans lequel le moyen d'entraînement axial comprend un moteur (104) et le moyen d'entraînement (100) comprend un amplificateur de transmission (100) ayant une entrée positive et une entrée négative (96, 98) et un tachymètre (108) associé à la sortie de moteur (106), l'amplificateur de transmission (100) recevant le signal de différence (88) à son entrée positive et la sortie du tachymètre à son entrée négative de façon à stabiliser l'entraînement du moteur.

5. Tour selon la revendication 3, dans lequel le signal de commande (122) est numérique et le moyen capteur comprend un dispositif (118) pour convertir le signal de capteur (120) de la forme analogique à la forme numérique.

6. Tour selon la revendication 1, dans laquelle chaque moyen d'entraînement axial comprend un moteur d'entraînement (40, 58, 66) et une transmission par vis à billes (42, 60, 68) couplée entre le moteur d'entraînement et le chariot respectif.

7. Tour selon la revendication 1, dans laquelle chaque porte-outil comprend une tourelle (48, 50) pour positionner sélectivement un outil parmi la pluralité d'outils pour une opération d'usinage.

## Patentansprüche

1. Drehmaschine (10) mit einen Traggestall (18, 20), einer ersten und einer zweiten Spindel (22a, b), die mit parallelen Drehachsen am Traggestell angeordnet sind und von denen jede Spindel dazu dient, ein betreffendes Werkstück in Drehung zu versetzen, während dieses einer Bearbeitung mittels eines Werkzeugs (52, 54) unterzogen wird, das relativ zu den Drehachsen bewegbar ist, einem Verbundschlitten (26), der am Traggestell für eine Bewegung in einer ersten Richtung relativ zu den Drehachsen verschiebbar gelagert ist, einem Querschlitten (30), der am Verbundschlitten (26) für eine Bewegung in einer zweiten, quer zu der ersten Richtung verlaufenden Richtung verschiebbar gelagert ist, einem ersten Werkzeughalter (48), der am Querschlitten (30) angeordnet ist, einem am Querschlitten (30) für eine Bewegung in der zweiten Richtung verschiebbar angeordneten Hilfsschlitten (46) mit einem zweiten Werkzeughalter (50), einer Mehrzahl von Aschsenantriebsmitteln (104, 40, 66, 58), von denen jedes einem zugehörigen Schlitten oder Werkzeughalter zugeordnet ist, un diesen Schlitten oder Schlitten oder Halter zu bewegen, einer Mehrzahl von Sensoren (43, 70), die dem Querschlitten (30) bzw. dem zweiten Werkzeughalter (50) zugeordnet sind, um die Bewegung dieses Schlittens bzw. Werkzeughalters zu ermitteln und ein das Ermittlungsergebnis darstellendes Ausgangssignal zu erzeugen, und einer Steuereinrichtung (72, 74, 76, 78), die auf ein Lage- und Befehlssignal für den Querschlitten (30) bzw. den zweiten Werkzeughalter (50) und auf das Ausgangssignal der Sensoren (43, 70), die dem Querschlitten (30) zugeordnet sind, anspricht, um die betreffenden Achsenantriebsmittel zu steuern, um den Querschlitten (30) bzw. den zweiten Werkzeughalter (50) entsprechend dem Befehlssignal zu positionieren, gekennzeichnet durch einen zweiten Hilfsschlitten (44), der den ersten Werkzeughalter (48) trägt und der am Querschlitten (30) für eine Bewegung in der ersten Richtung verschiebbar angeordnet ist.

2. Maschine nach Anspruch 1, dadurch gekennzeichnet, daß die Steuereinrichtung eine Mehrzahl unabhängiger Steuerkanäle (72, 74, 76, 78) aufweist, deren Anzahl der Anzahl der Achsenantriebsmittel entspricht, und daß jeder Steuerkanal einem zuigehörigen Achsenantriebsmittel (104, 40, 66, 58) zugeordnet ist.

3. Maschine nach Anspruch 2, dadurch gekennzeichnet, daß jeder Steuerkanal einen Komparator (82) zum Vergleichen eines Befehlssignals (122) und eines einem betreffenden Achsenantriebsmittel (104) zugeordneten Ausgangssignals (86) und zum Erzeugen eines den Unterschied zwischen diesen Signalen darstallenden Differenzsignals (88) sowie eine Treibereinrichtung (100) besitzt, die zwischen den Komparator (82) und das zugehörige Achsenantriebsmittel (104) geschaltet ist und auf das Differenzsignal (88) anspricht, um das betreffende Achsenantriebsmittel (104) entsprechend dem Differenzsignals zu betätigen.

4. Maschine nach Anspruch 3, dadurch gekennzeichnet, daß das Achsenantriebsmittel einen Motor (104) aufweist, daß die Treibereinrichtung (100) einen Treiberverstärker (100) mit positiven und negativen Eingängen (96, 98) und ein Tachometer (108) besitzt, das der Abtriebsseite (106) des Motors zugeordnet ist, und daß der Treiberverstärker (100) das Differenzsignal (88) an seinem positiven Eingang und das Ausgangssignal des Tachometers an seinem negativen Eingang erhält, um die Antriebstätigkeit des Motors zu stabilisieren.

5. Maschine nach Anspruch 3, dadurch gekennzeichnet, daß das Befehlssignal (122) digitale Form besitzt und daß die Sensoreinrichtung eine Vorrichtung (118) zum Umwandeln des Sensorsignals (120) von analogen in das digitale Format aufweist.

6. Maschine nach Anspruch 1, dadurch gekennzeichnet, daß jedes Achsenantriebsmittel einen Antriebsmotor (40, 58, 66) und einen Kugelumlaufspindeltrieb (42, 60, 68) besitzt, der zwischen den betreffenden Antriebsmotor und den zugehörigen Schlitten getrieblich eingefügt ist.

7. Maschine nach Anspruch 1, dadurch gekennzeichnet, daß jeder Werkseughälter einem Werkzeughalterkopf (48, 50) aufweist, um eines von einer Mehrzahl von Werkzeugen für einen Bearbeitungsvorgang wahlweise in Stellung zu bringen.

FIG. 1

FIG. 2

FIG. 3